# EUROPEAN PATENT APPLICATION

(11) **EP 0 535 977 A1**
(43) Date of publication of application: **07.04.1993**
(21) Application number: 92309013.8
(22) Date of filing: 02.10.1992
(51) Int. Cl.: B32B 1/06, B32B 15/08, E04B 1/80

(54) **Thermally insulating panels and methods of making them**

(30) Priority: 02.10.1991 JP 282086/91; 02.10.1991 JP 282087/91
(71) Applicant: FUJIMORI KOGYO CO., LTD., Tokyo 103 (JP)
(72) Inventor: Watanabe, Hiroshi, c/o Fujimori Kogyo Co., Ltd., Chuo-ku, Tokyo (JP)
(74) Representative: Stoner, Gerard Patrick

(57) **Abstract**

A thermally insulating panel comprises thermal insulating material (12) packed in a sealing bag composed of an obverse face material (1) and a reverse face material (6), wherein each of the obverse face material (1) and reverse face material (6) is preferably made of a metal foil composite plastic film or metal vapour deposited plastic film, and an additional metal foil composite plastic film (15) is stuck on the outer surface or inner surface of the obverse face material (1), which preferably has holes (21), by heat bonding under pressure.

## Description

This invention relates to thermally insulating panels, in which thermal insulating material is vacuum-packed in a sealed bag made of facing materials, and to methods of making such panels.

Such panels are generally known. JP-B-58/50394 ("Method for Manufacturing Thermal Insulating Panel") describes a conventional manufacturing method in which thermal insulating powder is charged into a gas-permeable packing bag which itself is put into an outer bag which is subsequently sealed undervacuum. This method has disadvantages in that when the outer bag is of plastics, gas is liable to permeate through and degrade the vacuum and thermal properties of the panel; conversely when metal foil is laminated on the outer bag to prevent gas permeation, the metal foil contributes to thermal conduction at the periphery of the panel, where the obverse and reverse sheets are bonded together, and again thermal performance is degraded.

In our JP-B-62/39455 we also proposed using a metal foil, but using a special layer to obstruct adhesion of the foil at the bonded edges of the panel. Foil at those parts could therefore be trimmed away. However, this method is rather complicated for use in mass-production.

The general problem addressed herein is to provide a novel constructions of thermally insulating panels, and in other aspects novel methods of making thermally insulating panels.

Preferred features to be achieved include the prevention of gas permeation into the panel, low thermal conductivity at the edges of the panel, and good heat reflection at the panel surface. In this application, we discuss various technical measures directed to achieving good results in one or more of these areas.

A simple manufacturing process is also important, and we describe processing schemes which can contribute to such a simple process.

In a first aspect, the invention provides a thermally insulating panel comprising thermal insulating material vacuum-packed into a sealing bag made from first and second face materials joined together to enclose the insulating material, in which one or both of the face materials is made from a composite comprising a plastics film with a metal evaporated layer thereon. Where one of the faces does not have the metal evaporation layer composite, that face desirably has instead a metal foil/plastics film composite.

We find that a bag of this type has surprisingly low thermal conductivity, in particular at the locations where the face materials are joined to one another usually around the periphery of the sealing bag. The reason for the low conductivity at the joined portions is not certain, but it may be that the thinness of the vapour-formed metal layer is such that the effect of a true continuous film is not present.

Typically, the panel has a peripheral region around the insulating material, around which the face materials are bonded face-to-face, usually by heat bonding.

We also propose that face material of a thermal panel of the present general type may have a metal/plastic composite film stuck over its surface, but not extending over those portions at which the obverse and reverse are bonded together. In a particular embodiment, an additional metal/plastic composite film covers an array of holes in the face material, for reasons explained in detail below.

In a second aspect of the invention, we provide a method of making a thermally insulating panel in which thermal insulating material is vacuum-packed in a sealing bag of joined first and second face materials, and a metal/plastic composite film - generally a metal foil/plastic composite - is stuck over part of the surface - outer or inner - of at least an obverse of said face materials. The method comprises positioning the additional film composite in relation to the basic obverse face material and pressing the two together with heat to bond them together, before completing the panel by packing with thermal insulating material and suitably bonding to a reverse face material.

By positioning a pre-dimensioned composite add-on in relation to the obverse face material, automation of the process can be achieved while avoiding applying the add-on film at undesired regions.

In particular, it is preferred to use a pre-forming die having a recess. The add-on film may be placed in the recess and the obverse face materials applied heated over the recess for pressing down onto the add-on; this bonds the additional metal/plastic composite film onto the outer surface of the obverse face material. Alternatively, the obverse face material may be supplied heated over the recess and the add-on placed on the obverse face material before pressing down into the recess; this bonds the add-on onto the inner surface. By pressing down into the shaped recess, the obverse face material is generally formed into a recessed shape with a surrounding peripheral bonding area. The peripheral bonding area can be conveniently presented for bonding of the reverse face material.

The metal foil composite plastics film should be positioned so that it is substantially not present at the bonding periphery of the obverse face material, but only on the outer or inner surface of the recessed portion. Thus, undesirable excess conductivity is avoided at the bond between obverse and reverse.

The combination of bonding of the add-on and shaping the recess in one operation is also convenient for processing.

In a third aspect, the face material having the metal/plastics composite film stuck over part of its surface also has a number of holes in the region where the metal/plastics composite film is stuck. The holes may be distributed over the area covered by the add-on composite film. Preferably the obverse face material and the metal/plastic composite add-on are bonded together in a pressing step which presses only around a peripheral portion of the add-on film, to cover the holes. An annular pressing shape can be used to achieve this.

By having holes in the face material, the undesirable presence of air between the face material and the extra film can be minimised since such air can be discharged through the holes, either outwardly or inwardly depending on which side the film is bonded.

This offers advantages in that the bond between the obverse face material and the extra film can be made more secure and absolute. Also, when the extra film is on the outside of the obverse face material, there is potentially a problem in that air enclosed between these two layers may in time leak into a panel and degrade its performance. By using holes as proposed, the enclosed air can more easily be eliminated during the creation of the panel and that problem avoided.

By thermally bonding only the periphery of the extra film, potential problems in bonding due to trapped air are further reduced. Nevertheless the peripheral bond surrounds the holes of the obverse face material, so that the gas-tightness of the layer is not prejudiced.

It should be understood that in this second aspect, both face materials (obverse and reverse) may be of a metal foil/plastic film composite, although it is preferred that at least one of them be made of a metal evaporation layer composite plastic film.

Usually, the obverse is a face of which the material is recessed to accommodate the packing material, so that the reverse may be an essentially flat backing. The invention is not limited to this situation, however.

Preferred features and embodiments of the invention are now described, referring to the drawings in which:
Figure 1 is a cross-sectional view showing an insulating panel;
Figure 2 is a cross-sectional view showing one example of a metal foil composite plastic;
Figure 3 is a cross-sectional view showing a second embodiment of insulating panel;
Figure 4 is a cross-sectional view showing a third embodiment of insulating panel;
Figure 5 is a cross-sectional view showing a fourth embodiment of insulating panel;
Figure 6 is a cross-sectional view showing a fifth embodiment of insulating panel;
Figure 7 is a schematic cross-sectional view showing a metal foil composite plastic film placed in a pre-forming die, to make a thermal insulating panel as shown in Fig. 3;
Figure 8 is a corresponding subsequent view showing an obverse face material being supplied;
Figure 9 is a subsequent view showing the obverse face material being pressed;
Figure 10 is a subsequent view showing a thermal insulating material being supplied;
Figure 11 is a subsequent view showing a reverse face material being supplied;
Figure 12 is a schematic cross-sectional view of a second method embodiment, showing an obverse face material being pressed to make a vacuum insulating panel as shown in Fig. 5;
Figure 13 is a schematic cross-sectional view of a third method embodiment, showing an obverse face material being supplied to the cavity of a pre-forming die in manufacturing an insulating panel as shown in Fig. 4;
Figure 14 is a subsequent view showing a metal foil composite plastic film placed on the obverse face material;
Figure 15 is a subsequent view showing the metal foil composite plastic film and the obverse face material being pressurised;
Figure 16 is a subsequent view showing the thermal insulating material in position;
Figure 17 is a subsequent view showing the reverse face material being supplied; and
Figure 18 is a schematic cross-sectional view of a fourth method embodiment, showing obverse face material being pressed in manufacturing a vacuum thermal insulating panel of the type in Fig. 6.

### DETAILED DESCRIPTION

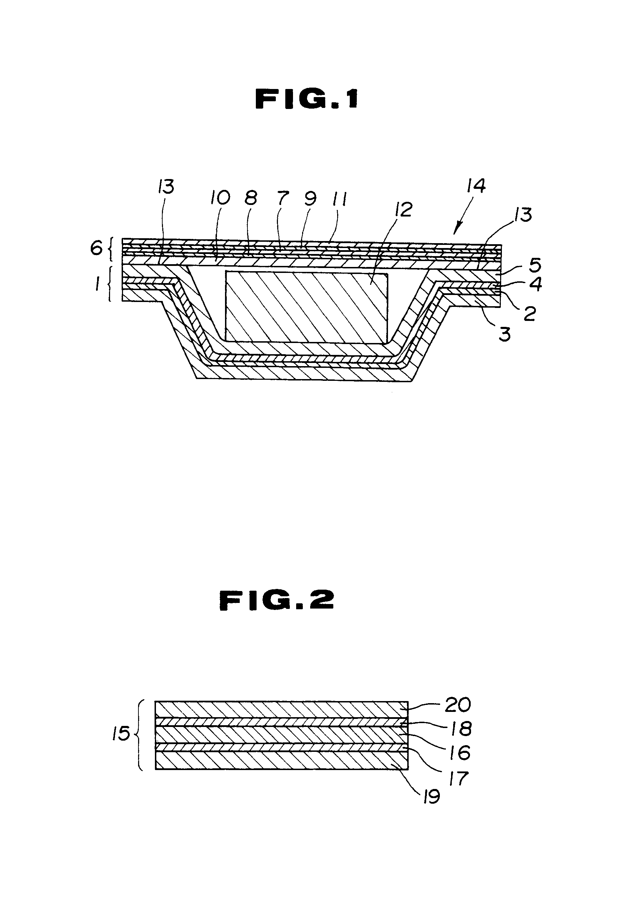

Preferred features of the present invention will be described with reference to Fig. 1. In this figure, numeral 1 indicates an obverse face material. The obverse face material 1 is formed by lamination of a sealant layer 5 on a surface layer 3 having vapour deposited layer 2 on its inner surface through an adhesive layer 4. The metal evaporation layer 2 can be obtained by evaporation of a metal such as aluminum onto the surface layer 3 by a known method. The thickness of the metal evaporation layer 2 is within a range from 300 to 1000 A , preferably, from 500 to 800 A . As the surface layer 3, there can be adopted a heat resisting plastic film such as polyester, polyamide, or polypropylene. The thickness of the plastic film is usually within a range from 5 to 40 f..lm. In addition, the surface layer 3 may be a single layer or composite layer of these plastic films. As the sealant layer 5, there can be adopted a plastic film having a thickness of 15 to 300 f..lm, such as polyethylene, polypropylene, ethylene-vinyl copolymer or polyacrylonitrile. Particularly, in the view point of gas proofing property and the resistance against remaining halocarbon gas when using e.g. Freon@ gas as a foaming agent in manufacturing a filler, polyacrylonitrile is preferably used. In order to bond the surface layer 3 to the sealant layer 5, there can be used a known adhesive such as an urethane adhesive or isocyanate adhesive.

Numeral 6 indicates a reverse face material. The reverse face material 6 is formed by lamination of a sealant layer 10 and a surface layer 11 on both sides of a metal foil 7 through adhesive layers 8 and 9, respectively. In this case, the sealant layer 10 and the surface layer 11 can be respectively formed to the same thicknesses using the same materials as the sealant layer 5 and the surface layer 3 of the obverse face material 1. As the metal foil 7, there can be used the same metal as the metal evaporation layer 2, preferably, aluminum. The thickness of the metal foil 7 is within a range from 3 to 50 f..lm, preferably, from 5 to 20 f..lm.

Numeral 12 indicates a thermal insulating material. As the thermal insulating material 12, there can be used powder of perlite, white carbon, polystyrene foam, sintered polyethylene or the like accommodated in a gas permeable bag. A polyurethane foam block can also be used. Among them, sintered polyethylene powder has a small heat conductivity compared with perlite and white carbon (sintered polyethylene: λ = 0.003, perlite, white carbon: λ = 0.007). Further, although the conventional polyethylene foam is unsuitable because bubbles thereof are ruptured in vacuum, the sintered polyethylene has bubbles being hard and continuous, which are not crushed in vacuum, and therefore, is particularly preferable as a thermal insulating material.

In the vacuum thermal insulating panel according to the embodiment as shown in Fig. 1, the whole periphery of the sealant layer of the obverse face material 1 is thermally bonded (13, 13) to the whole periphery of the sealant layer 10 of the reverse face material 6. Thus a sealing bag 14 is formed and the thermal insulating material 12 is vacuum-packed in the sealing bag 14.

In this case, the thermally bonded portions 13 and 13 come close to each other, and consequently, when the obverse face material and the reverse face material are respectively made of a metal foil laminated film, there is generated a large thermal conduction at the thermally bonded portions 13 and 13. However, since the obverse face material 1 is made of a metal evaporation film and the reverse face material 6 is made of a metal foil laminated film, we find there is scarcely any excess heat conduction at the thermally bonded portions 13 and 13.

In contrast to the embodiment as shown in Fig. 1, the obverse face material 1 and the reverse face material 6 may be made of a metal foil laminated film and a metal evaporation layer film, respectively.

Also, in the embodiment as shown in Fig. 1, the metal foil of the reverse face material 6 is replaced by the metal evaporation layer, and thus the obverse face material and the reverse face material may be made of the metal evaporation layer film.

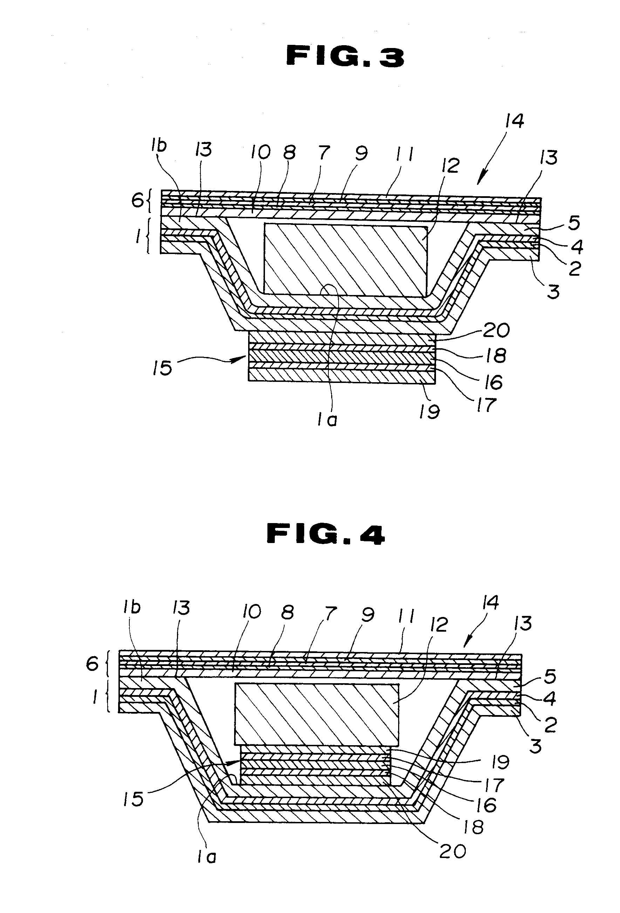

Further, the metal foil composite plastic film 15 having such a construction as shown in Fig. 2 may be stuck on the outer surface or inner surface other than the above thermal adhesive-bonded portions 13 and 13 of the obverse face material 1, as shown in Figs. 3 and 4, thereby obtaining a vacuum thermal insulating panel excellent in a thermal reflecting property. The film 15 is formed by respectively laminating a surface layer 19 and sealant layer 20 on both sides of a metal foil 16 such as aluminum through adhesive layers 17 and 18. The surface layer 19 and the sealant layer 20 can be formed to the same thicknesses with use of the same materials as the above surface layer 3 or 11, and the sealant layer 5 or 10. In this case, when a film having a thermal adhesive property such as polyester or nylon is used as the obverse face material 1, ethylene-ethylacrylate copolymer resin graft-modified by silane is preferable for the sealant layer 20.

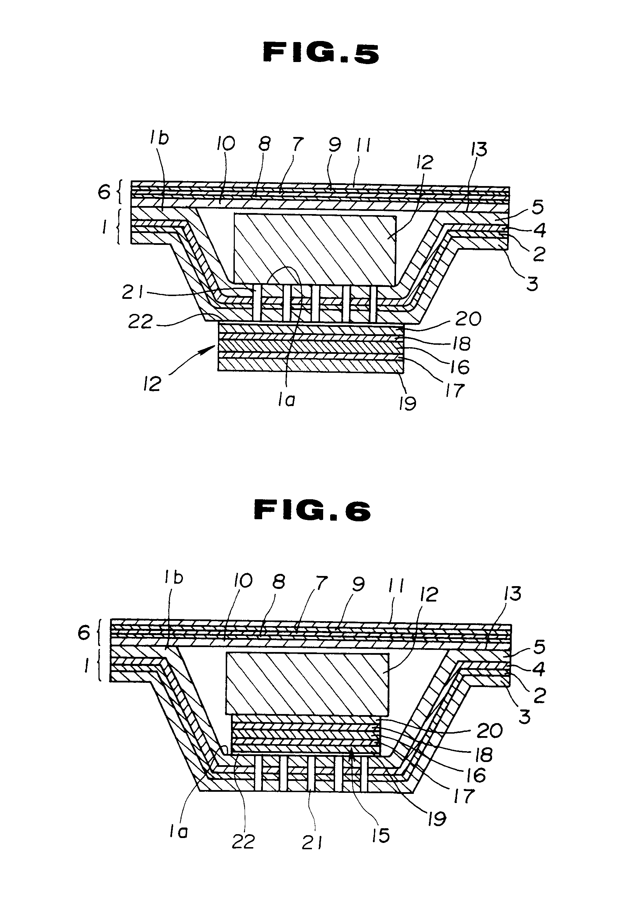

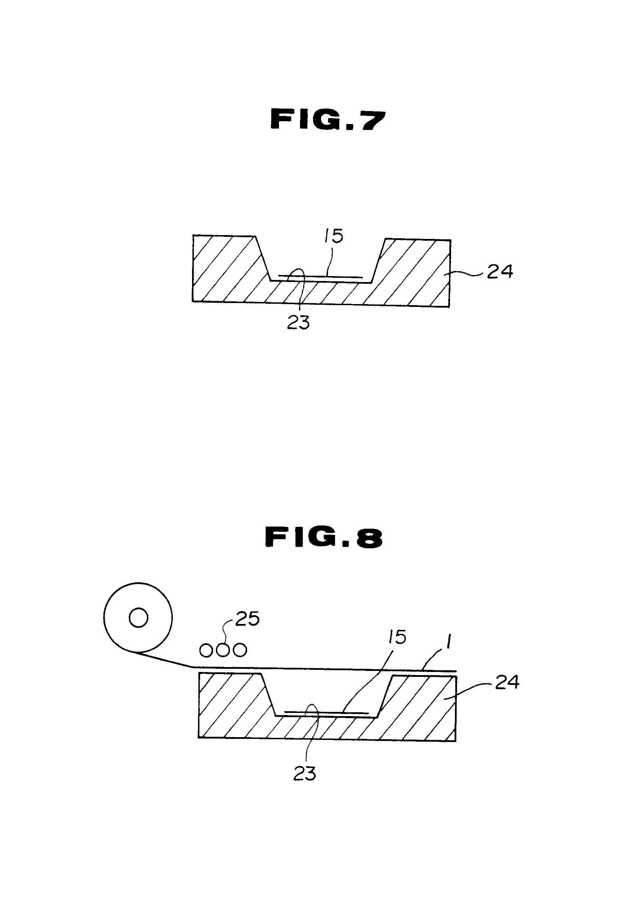

In addition, the metal foil composite plastic film 15 may be thermally bonded on the inner surface or outer surface of the heated obverse face material, wholly or only at the periphery. In this case, as shown in Figs. 5 and 6, it is preferably bonded at the periphery of the outer surface or inner surface of the obverse face material which has holes 21 within the range where the metal foil composite plastic film 15 is stuck. In the case of using the obverse face material having the above holes, the bore diameter is preferably in the range from 1 to 30 mm, more preferably from 5 to 20 mm. The density of the holes is preferably in the range from 1 to 20/10cm2, more preferably, from 2 to 5/10cm².

In a vacuum thermal insulating panel as shown in Fig. 5, a metal foil composite plastic film 15 is disposed on the outer surface of the obverse face material 1 having a number of holes 21 in the range where the metal foil composite plastic film 15 is stuck so as to cover these holes 21, and only its peripheral portion is thermally bonded (22). Further, in a vacuum thermal insulating panel as shown in Fig. 6, a metal foil composite plastic film 15 is disposed on the inner surface of the obverse face material 1 having a number of holes 21 in the range where the metal foil composite plastic film 15 is stuck so as to cover these holes 21, and only the peripheral portion is thermal adhesive-bonded (22).

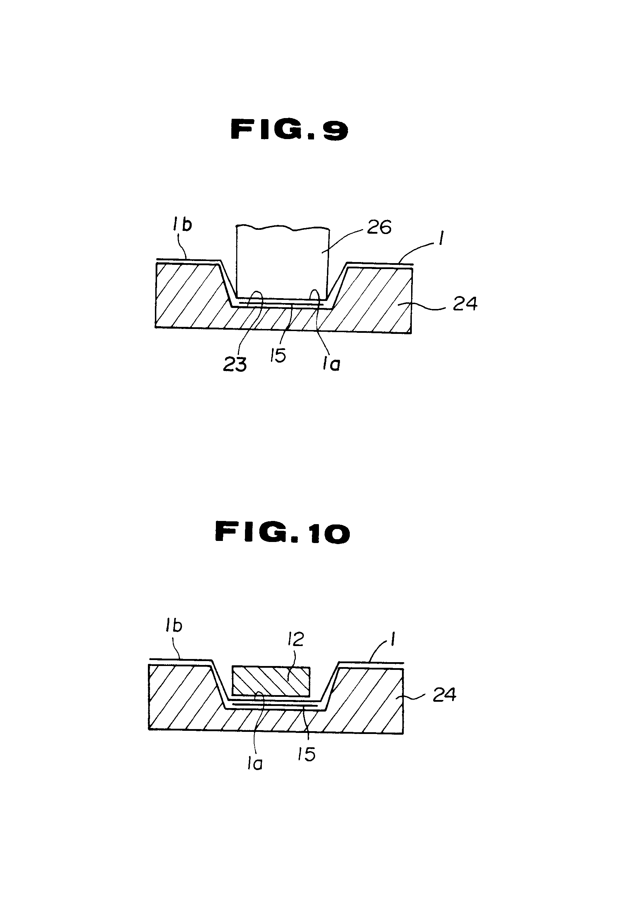

In manufacturing a vacuum thermal insulating panel as shown in Fig. 3, a metal foil composite plastic film 15 is placed on the bottom surface of a recessed cavity 23 of a pre-forming die 24 having the cavity 23 with the surface layer 19 directed downwardly, as shown in Fig. 7. Subsequently, the obverse face material 1 which 1 is heated at a temperature of a softening point of the obverse face material 1 or more by a heater 25 is supplied above the cavity 23 with the surface layer 3 directed downwardly, as shown in Fig. 8. Thereafter, as shown in Fig. 9, the heated obverse face material 1 is pressurized by a press 29 to be pushed on the bottom surface of the cavity 23. Thereby, the obverse face material 1 is formed in a recessed shape corresponding to the shape of the cavity 23, and at the same time, the heated obverse face material 1 is pushed on the above film 15 by the press 26, so that the film 15 is brought in press-contact with the obverse face material 1, and the sealant layer 20 of the film 15 is thermally bonded onto the surface layer 3 of the obverse face material 1. Then, the one end portion of the obverse face material 1 is cut at the suitable position, and the upper end portion of the recessed portion 1a is formed into a bonding lip 16, with a flat surface presented.

Next, as shown in Fig. 10, the thermal insulating material 12 is packed in the recessed portion 1a of the obverse face material 1, after which the reverse face material 6 is supplied above the thermal insulating material 12 with the sealant layer 11 directed downwardly. Then, the ring-like upper jaw portion 1 b except for a part thereof is thermally bonded (27, 27), and the one end portion of the reverse face material 6 is cut. The obtained panel is inserted in a vacuum sealing machine (not shown), and the non-bonded portion of the ring-like upper jaw 1 b of the obverse face material 1 is thermally bonded to the reverse face material 6 in a vacuum, thus forming a sealing bag while keeping the interior in vacuum. Consequently, there can be obtained a vacuum thermal insulating panel wherein the thermal insulating material 12 is vacuum-packed in the sealing bag, and the metal foil composite plastic film 15 is partially stuck on the outer surface thereof.

In a process as shown in Fig. 10, one or more kinds of getter agents such as activated carbon, calcium chloride, calcium hydroxide, zeolite and the like may be packed in the recessed portion 1a of the obverse face material 1 together with the thermal insulating material 12, as required.

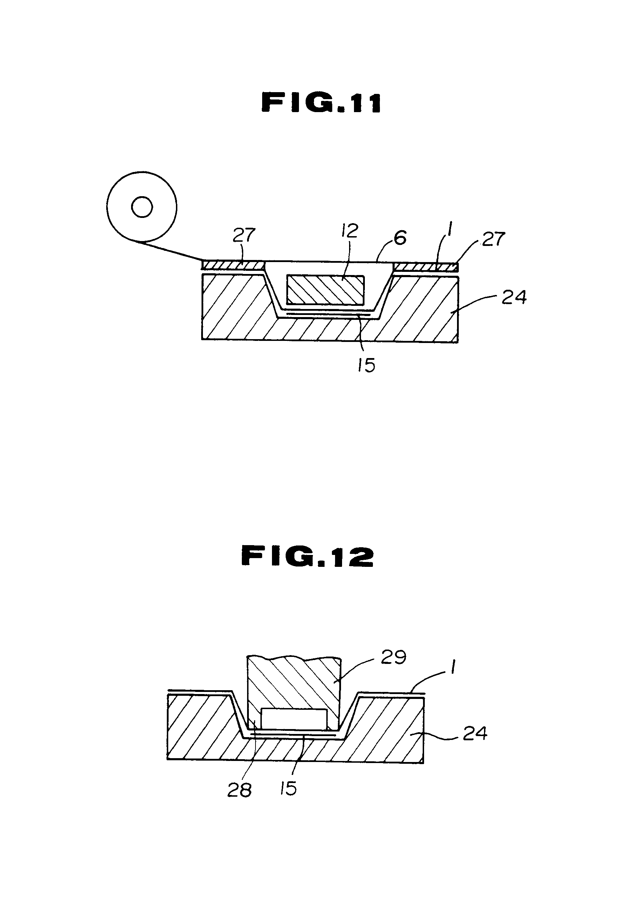

A method for manufacturing a vacuum thermal insulating panel as shown in Fig. 5 is the same as the above-mentioned embodiment, except for the following point; in a pressing and thermal bonding process of the above embodiment as shown in Fig. 9, with the use of a press 29 wherein the lower peripheral surface portion has a ring-like projection portion 28 as shown in Fig. 12, in place of the press 26 as shown in Fig. 9, the periphery of the metal foil composite plastic film 15 is thermally bonded on the obverse face material 1.

According to this method, a number of holes 21 are formed in the region where the metal foil composite plastic film 15 is stuck to the obverse face material. Even if air exists between the obverse face material 1 and the film 15 in thermal bonding of the obverse face material 1 to the film 15, the air is not enclosed, and consequently, there is never generated obstruction of the thermal bonding. Also, even if air remains between the obverse face material 1 and the film 15 after thermal bonding, the air is purged together with the internal air during purging the internal air in the vacuum sealing machine, so that there never remains air between the obverse face material 1 and the film 15 in the resulting vacuum thermal insulating panel. This eliminates such a trouble of reducing the internal vacuum degree and lowering the thermal insulating performance due to permeation of the remaining air into the panel. Further, since the above holes 21 are covered with the film 15, and the periphery of the film 15 is thermally bonded (22) onto the obverse face material 1, they are never exposed on the outside, and accordingly, air is less liable to permeate to the interior through the above holes 21.

The other functional effect of the vacuum thermal insulating panel of the embodiment as shown in Fig. 5 is the same as that as shown in Fig. 3, and therefore, the explanation thereof is omitted.

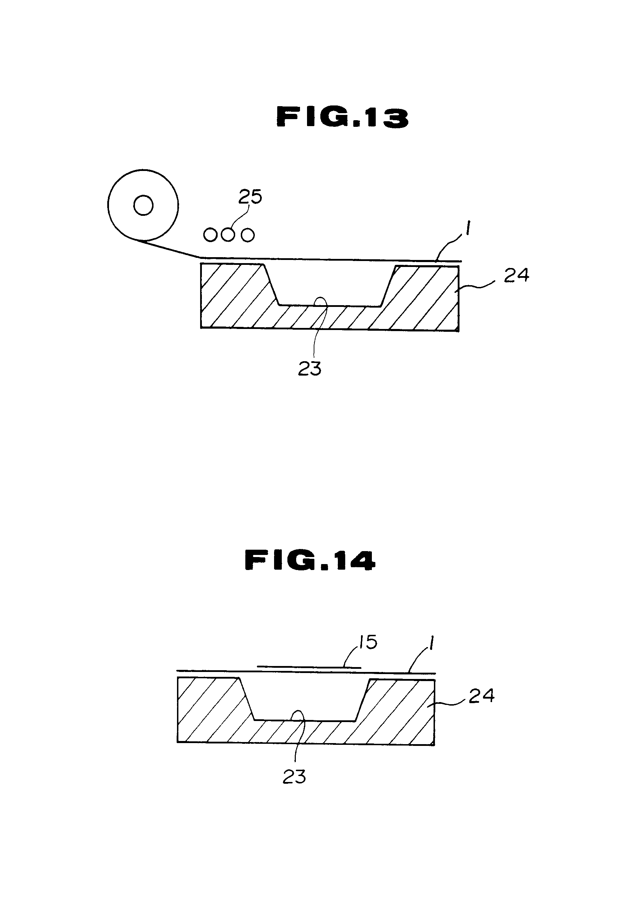

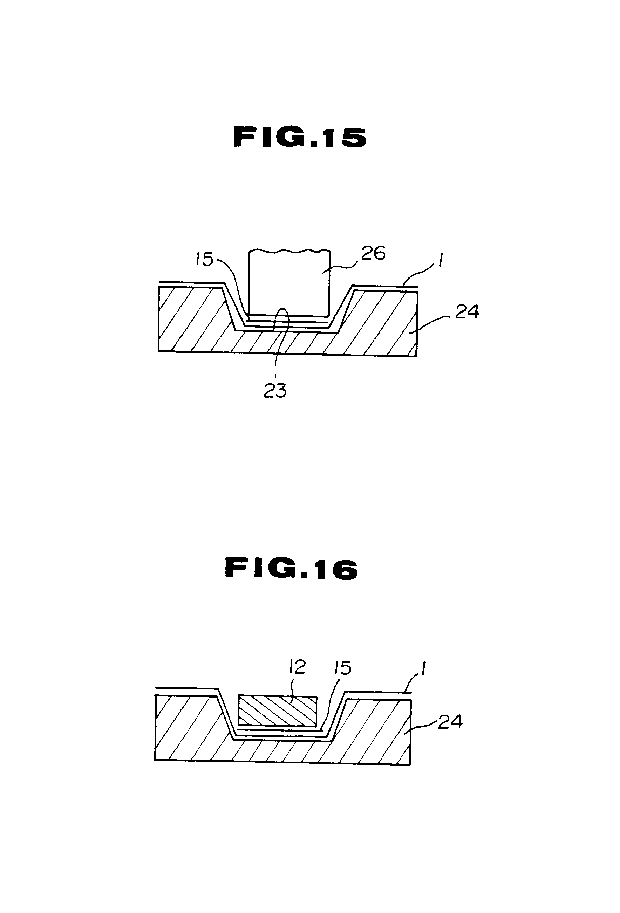

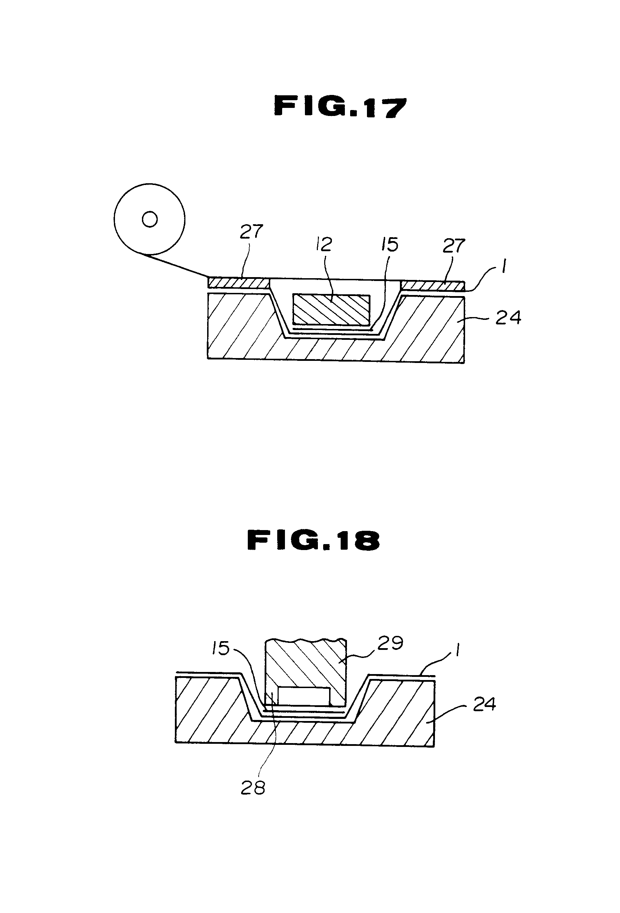

In manufacturing a vacuum thermal insulating panel as shown in Fig. 4, the obverse face material 1 which is heated at a temperature of a softening point of the obverse face material 1 or more by the heater 25 is supplied above the recessed cavity of the pre-forming die 24 having the cavity as shown in Fig. 13. Then, as shown in Fig. 14, the metal foil composite plastic film 15 is placed on the obverse face material 1, being pressed, and is then thermally bonded. Subsequently, the processes as shown in Figs. 16 and 17, that is, corresponding to those shown in Figs. 10 and 11, are repeated to obtain the vacuum thermal insulating panel in which the thermal insulating material 12 is vacuum-packed in the sealing bag and the metal foil composite plastic film 15 is partially bonded on the inner surface of the obverse face material 1.

A method for manufacturing a vacuum thermal insulating panel as shown in Fig. 6 is the same as the embodiment as shown in Fig. 4, except that, as shown in Fig. 18, the same press 29 as shown in Fig. 12 is used in the pressing and thermal bonding process.

The effect of the vacuum thermal insulating panel of the embodiment as shown in Fig. 4 or 6 is the same as that as shown in Fig. 3 or 5, and therefore, the explanation thereof is omitted.

In the vacuum thermal insulating panel manufactured in the above-mentioned process, thermal conductivity is low and the deterioration of the vacuum degree with time is made very small, as shown in the following examples.

### [Example 1]

### Construction of obverse face material

Surface layer:
polyester film on which aluminum is evaporated in vacuum, 12 µm Sealant layer:
acrylonitrile (Zecron film manufactured by Mitsui Toatsu Chemical), 50 µm Adhesive layer: urethane adhesive, 2 µm

### Construction of reverse face material

Surface layer: polyester film, 25 µm Metal foil: aluminum, 10 µm

Sealant layer:
acrylonitrile (Zecron film manufactured by Mitsui Toatsu Chemical), 50 µm Adhesive layer: urethane adhesive, 2 µm

### Construction of metal foil composite plastic film

Surface layer: polyester film, 12 µm

Adhesive layer: urethane adhesive, 10 µm

Metal foil: aluminum, 10 µm

Sealant layer:
ethylene-ethylacrylate copolymer resin, 50 µm (laminated by a melt extrusion laminating method) Dimension: 400 mm X 400 mm

### Thermal insulating material

Polyurethane foam plate: thickness 15 mm

With use of the above materials, a vacuum thermal insulating panel (420 mm X440 mm) was manufactured in the processes as shown in Figs. 7 to 11. In this case, a cavity bottom surface of a pre-forming die has an area of 400 mm X 400 mm, and a depth of 15 mm.

Further, the vacuum sealing was executed under a vacuum degree of 10-² Torr.

Table 1 shows the vacuum degree and thermal conductivity with time in the vacuum thermal insulating panel thus obtained.

The vacuum thermal insulating panel obtained by bonding a metal foil composite plastic film on the inner surface of the obverse face material obtained in the process as shown in Figs. 13 to 17 shows the same effect.

### [Example 2]

The same experiment was repeated, except for using the obverse face material 1 having holes with a bore diameter of 10 mm, and a density of 2 pieces/10 0 cm2 in the range where the metal foil composite plastic film is stuck. The vacuum thermal insulating panel thus obtained was measured in the same manner as in Example 1. The results are shown in Table 1.

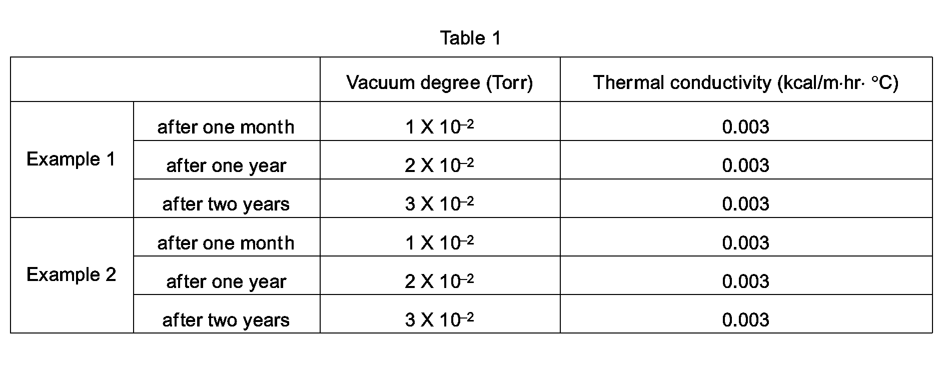

## Claims

1. A vacuum thermal insulating panel comprising a sealing bag formed of an obverse face material and a reverse face material, and a thermal insulating material vacuum-packed in said sealing bag,
wherein one of said obverse face material and said reverse face material is made of a metal foil composite plastic film, and the other is made of a metal evaporation layer composite plastic film.

2. A vacuum thermal insulating panel comprising a sealing bag formed of an obverse face material and a reverse face material, and a thermal insulating material vacuum-packed in said sealing bag,
wherein each of said obverse face material and said reverse face material is made of a metal evaporation layer composite plastic film.

3. A vacuum thermal insulating panel according to claim 1 or 2, wherein a metal foil composite plastic film is partially stuck on the outer surface or inner surface of said obverse face material.

4. A vacuum thermal insulating panel according to claim 1 or 2, wherein said metal evaporation layer is an aluminum evaporation layer.

5. A vacuum thermal insulating panel according to claim 1 or 2, wherein said thermal insulating material is a sintered polyethylene.

6. A method for manufacturing a vacuum thermal insulating panel wherein a thermal insulating material is vacuum-packed in a sealing bag composed of an obverse face material and a reverse face material, and a metal foil composite plastic film is partially stuck on the outer surface of said obverse face material, comprising the steps of:
placing said metal foil composite plastic film on the bottom surface of a recessed cavity of a pre-forming die having said cavity;
supplying said obverse face material heated above said cavity;
pressing said obverse face material into a recessed shape having a peripheral lip portion at its edge, and at the same time, thermally bonding said metal foil composite plastic film onto the outer surface of said obverse face material;
packing said thermal insulating material in said recessed portion of said obverse face material;
supplying a reverse face material so as to cover said obverse face material; and
thermally bonding and sealing the outer peripheral edge of said reverse face material onto said ring-like jaw portion of said obverse face material under vacuum.

7. A method for manufacturing a vacuum thermal insulating panel wherein a thermal insulating material is vacuum-packed in a sealing bag composed of an obverse face material and a reverse face material, and a metal foil composite plastic film is partially stuck on the inner surface of said obverse face materials, comprising the steps of:
supplying said obverse face material heated above a recessed cavity of a pre-forming die having said cavity;
placing said metal foil composite plastic film on said obverse face material:
pressing said obverse face material into a recessed shape having a ring-like jaw portion at its edge, and at the same time, thermally bonding said metal foil composite plastic film onto the inner surface of said obverse face material;
packing said thermal insulating material in said recessed portion of said obverse face material;
supplying a reverse face material so as to cover said obverse face material; and
thermally bonding and sealing the outer peripheral edge of said reverse face material onto said ring-like jaw portion of said obverse face material under vacuum.

8. A method for manufacturing a vacuum thermal insulating panel wherein a thermal insulating material is vacuum-packed in a sealing bag composed of an obverse face material and a reverse face material, and a metal foil composite plastic film is partially stuck on the outer surface of said obverse face material, comprising the steps of:
placing said metal foil composite plastic film on the bottom surface of a recessed cavity of a pre-forming die having said cavity;
supplying said obverse face material heated having a number of holes in the ranged where said metal foil composite plastic film is stuck above said cavity;
pressing said obverse face material on the portion corresponding to the periphery of said metal foil composite plastic film into a recessed shape having a ring-like jaw portion at its edge, and at the same time, thermally bonding the periphery of said metal foil composite plastic film onto the outer surface of said obverse face material while surrounding a number of holes formed on said obverse face material by the peripheral thermally bonded portion;
packing said thermal insulating material in said recessed portion of said obverse face material;
supplying a reverse face material so as to cover said obverse face material; and
thermally bonding and sealing the outer peripheral edge of said reverse face material onto said ring-like jaw portion of said obverse face material under vacuum.

9. A method for manufacturing a vacuum thermal insulating panel wherein a thermal insulating material is vacuum-packed in a sealing bag composed of an obverse face material and a reverse face material, ant a metal foil composite plastic film is partially stuck on the inner surface of said obverse face material, comprising the steps of:
supplying said obverse face material heated having a number of holes in the ranged where said metal foil composite plastic film is stuck above a recessed cavity of a pre-forming die having said cavity;
placing said metal foil composite plastic film on said obverse face material;
pressing said obverse face material into a recessed shape having a ring-like jaw portion at its edge, and at the same time, thermally bonding the periphery of said metal foil composite plastic film onto the inner surface of said obverse face material while surrounding a number of holes formed on said obverse face material by the peripheral thermally bonded portion;
packing said thermal insulating material in said recessed portion of said obverse face material;
supplying a reverse face material so as to cover said obverse face material; and
thermally bonding and sealing the outer peripheral edge of said reverse face material onto said ring-like jaw portion of said obverse face material under vacuum.

10. A method for manufacturing a vacuum thermal insulating panel according to any one of claims 6 to 9, wherein at least one of said obverse face material and said reverse face material is made of a metal evaporation layer composite plastic film.

11. A panel obtainable in accordance with any one of claims 6 to 10.
